# EUROPEAN PATENT SPECIFICATION

(11) **EP 4 015 882 B1**
(45) Date of publication and mention of the grant of the patent: **01.05.2024**
(21) Application number: 20214683.3
(22) Date of filing: 16.12.2020
(51) Int. Cl.: F16K 15/06

(54) **CHECK-VALVE**
RÜCKSCHLAGVENTIL
CLAPET ANTIRETOUR

(43) Date of publication of application: 22.06.2022
(73) Proprietor: Danfoss A/S, 6430 Nordborg (DK)
(72) Inventor: Iversen, Frank Holm, 6430 Nordborg (DK)
(74) Representative: Keil & Schaafhausen Patentanwälte PartGmbB

(56) References cited:
- WO-A1-2014/021124
- DE-A1-102004 006 632
- US-A1- 2012 160 346

## Description

The present invention relates to a check-valve comprising a housing having an inlet, an outlet, a fluid flow path between the inlet and the outlet and a valve seat in the fluid flow path, the seat having a valve seat axis, a valve element, a valve element support arranged in the housing and supporting the valve element, wherein a section of the flow path is formed between the housing and the valve element support and the valve element is moveable between a position in which it rests against the valve seat and a position in which contacts the valve element support.

Such a check-valve is known, for example, from EP 1 640 584 B1.

The invention relates in particular to a check-valve having a large flow capacity up to 100 m³/h. Such a check-valve has a large diameter of up to three inch and is in particular suitable for the desalination of salt water by means of reverse osmosis or treatment of waste water.

A check-valve should open as much as possible when the flow is directed in the passing direction, the opening movement should be as fast as possible. The check-valve should close as fast as possible when the direction of flow is reversed. Furthermore, the check-valve must work reliably even when it is mounted in an orientation where the valve element has to be moved against the direction of gravity. Thus, a force producing means driving the valve element in closing direction must produce at least a force to overcome stocking of the valve element. If the flow direction through the valve is upwards in direction of gravity, the force producing means must be able to overcome the impact of gravity on the valve element.

The effect of the combination of opening forces produced by the fluid flow and the closing forces in the opposite direction lead to the effect that the valve element although it can be moved to contact the valve element support does not rest against the valve element support. This increases flow losses, since the valve is not fully open, and produces wear.

WO 2014/021124 A1 describes a check valve according to the preamble of claim 1 comprising a housing having an inlet, an outlet, a fluid path between the inlet and the outlet and a valve seat in the fluid flow path, the valve seat having a valve seat axis, a valve element, a valve element support arranged in the housing and supporting the valve element, wherein a section of the fluid flow path is formed between the housing and the valve element support and the valve element is moveable between a position in which it rests against the valve seat and a position in which it contacts the valve element support. A space is formed between the valve element support and the valve element and fluid in this space must be displaced when the valve element is moved into an open position. To this end, the valve element support comprises recesses in a front face which contacts the valve element, so that openings are formed through which the fluid can escape.

US 2012/0160346 A1 describes a nozzle check valve having a normally open state. To this end a spring is used to draw the valve element away from the valve seat and fluid can normally flow through the check valve. Only, when a reverse flow occurs, the valve element has to be moved against the valve seat. To this end, the valve element support comprises a number of axial channels through which the fluid having a reverse flow direction with sufficient speed can reach the valve element and can move the valve element against the force of the spring towards the valve seat.

DE 10 2004 006 632 A1 shows another check valve in which a valve element is guided in a plate-like valve element support.

The object underlying the invention is to have a simple construction of a check-valve keeping low pressure loss and wear.

This object is solved with a check-valve as described at the outset in that the valve element support comprises at least one recess having an open side to the section of the fluid flow path and connecting the section of the fluid flow path to a space between the valve element and the valve element support.

The recess is formed in a side wall of the valve element support. Fluid flowing through the section of the flow path produces a vortex formation in the recess which in turn lowers the pressure in the recess. This lower pressure propagates into the space between the valve element and the valve element support leading to the effect that the valve element is not only pushed by the incoming fluid in a direction towards the valve element support, but that the valve element is in addition dragged in a direction to the valve element support. This improves the opening behaviour of the check-valve since the valve element can be moved rather fast to the valve element support.

The valve element and the valve element support form a chamber when the valve element rests against the valve element support, wherein the chamber is connected to the section of the fluid flow path via the recess. The lower pressure produced by the vortex formation in the recess propagates into the chamber between the valve element and the valve element support and drags the valve element against the valve element support.

This reduces the risk of the valve element lifting off the valve element support. The valve element can be held reliably against the valve element support so that a movement between the valve element and the valve element support can be inhibited once the valve element is in the fully open position and rests against the valve element support. The valve element is sucked against the valve element support.

In an embodiment of the invention the valve element is concave on the side facing the valve element support. The concave form is a simple way to form the chamber in which the lower pressure can be distributed evenly over the whole area of the valve element.

In an embodiment of the invention the valve element is flat or concave at a side facing away from the valve element support. In this way the valve element produces a larger flow resistance for the fluid flow through the check-valve. This larger flow resistance is used to open the check-valve fast and to assist in holding the check-valve in the open position.

In an embodiment of the invention the valve element comprises a stem which is guided in the valve element support. In this way it is possible to move the valve element along the valve seat axis only.

In an embodiment of the invention a bushing of a material different from the material of the valve element support forms a guide of the stem. The bushing is arranged in the valve element support. The stem does not have direct contact to the valve element support, but only contact to the bushing. This has the advantage that the material of the valve element support can freely be chosen, for example on basis of economic reasons. Furthermore, the material of the bushing can be chosen so that a friction between the stem and the bushing can be kept small.

In an embodiment of the invention a spring is arranged around the stem and the valve element support comprises a bore accommodating the stem, a groove surrounding the bore, and a wall between the bore and the groove, wherein part of the spring is arranged in the groove. In this way it is possible to use a spring having a low spring force ratio. A low spring force is wanted in the compressed position (open valve) and a high spring force is wanted in expanded position (valve closed, spring pressing valve element against valve seat).

In an embodiment of the invention the valve element support is made of plastic material. A plastic material can simply be formed, for example by injection moulding or by 3D-printing. Furthermore, it is in most cases cheaper than a metal.

The recess has a curved shape. The recess is limited by a section of a cylinder wall or a cone wall, wherein the axis of this cylinder wall or cone wall is located out of the valve element support. Such a rounded recess is simple to manufacture and produces the vortex with the necessary effect.

Additionally or alternatively, a bottom of the at least one recess runs in parallel to the valve seat axis.

In an embodiment of the invention the valve element support comprises a plurality of arms connecting the valve element support to the housing. The arms are integral with the valve element support. Usually a number of three arms is sufficient. The recess can be arranged between two arms. In a region between two arms the velocity of the flow of fluid is the largest. It is also possible to arrange a recess between each pair of arms. In other words, when there are three arms, there are also three recesses. The arms and the recesses are distributed evenly in circumferential direction.

In an embodiment of the invention the arms are connected by a ring. This contributes to the stability of positioning the valve element support in the housing.

In an embodiment of the invention the ring is clamped between a step in the first housing part and the second housing part. The step in the first housing allows a precise positioning of the valve element support in relation to the valve seat.

In an embodiment of the invention the ring bears a sealing ring. The sealing ring prevents fluid from leaking to the outside, for example through a gap or contact face between the first housing part and the second housing part.

In an embodiment of the invention the second housing part comprises a circumferential protrusion inserted into a radial gap between the ring and the first housing part and compressing the sealing ring. The sealing ring is compressed in axial direction and takes up tolerances on the height of the ring. Due to this compression the ring may expand or tries to expand in a direction perpendicular to the axial direction. This means that the sealing ring is pressed against the first housing part on the radial outer side and to the ring connecting the arms on the radial inner side and thus sealing the housing to the outside.

An embodiment of the invention will now be described with reference to the drawing, in which:
- Fig. 1: shows a schematic sectional view of a check-valve and
- Fig. 2: shows a valve element support in perspective view.

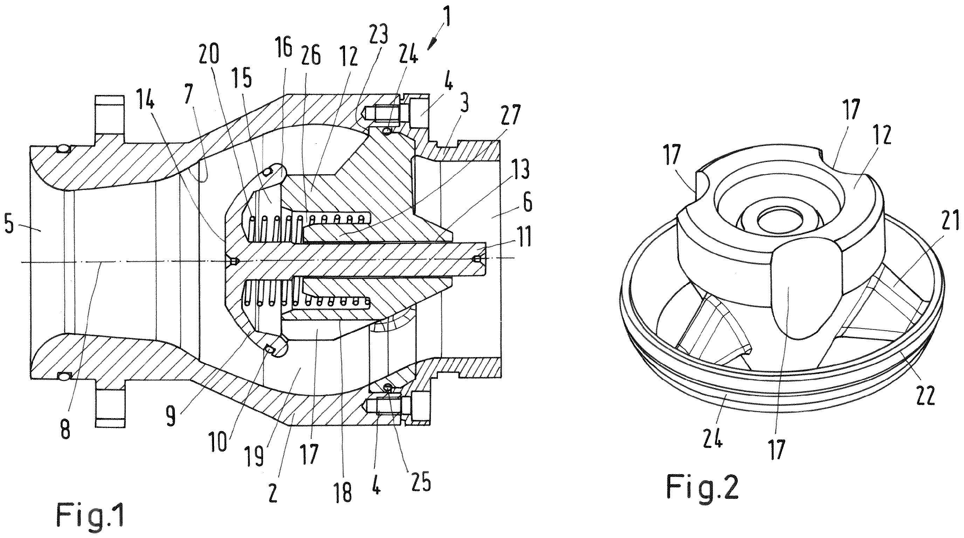

Fig. 1 shows schematically in a sectional view a check-valve 1. The check-valve 1 comprises a housing having a first housing part 2 and a second housing part 3. The first housing part 2 and the second housing part 3 are connected by means of screws 4 or the like, for example, a Victaulic clamp. It is also possible to replace the second housing part 3 with a tube or an end of a tube.

The first housing part comprises an inlet 5. The second housing part 3 comprises an outlet 6. The terms "inlet" and "outlet" relate to the flow of fluid through the check-valve 1.

The first housing part 5 comprises a valve seat 7 which is arranged between the inlet 5 and the outlet 6. The valve seat 7 defines a valve seat axis 8. In the present embodiment the valve seat axis 8 coincides with the middle axis of the inlet 5 and the outlet 6.

The check-valve 1 comprises a valve element 9. The valve element 9 comprises a valve element ring 10, for example in form of an O-ring.

The valve element 9 comprises a stem 11 with which the valve element 9 is guided in a valve element support 12.

The valve element support 12 can be made of a plastic material. It comprises a bore in which a bushing 13 is arranged. The bushing 13 is made of a material different from the material of the valve element support 12. The bushing can be made, for example, from Polyetheretherketone (PEEK). The material of the valve element support 12 can be a cheaper material, for example POM.

The stem 11 can be made of the same material as the valve element 9. This material can be, for example, stainless steel. The same material can be used for the two housing parts 2, 3.

The valve element 9 comprises a front face 14 which is flat (as shown) or concave. This front face 14 faces away from the valve element support 12.

On the side facing the valve element support 12 the valve element 9 is concave forming a chamber 15 together with the valve element support when the valve element 9 contacts the valve element support with its outer rim 16.

The valve element support comprises three recesses 17 which are distributed around the circumference of the valve element support 12. The recesses 17 are cut-outs in a circumferential wall of the valve element support 12. They are rounded. The round form can correspond, for example, to a part of an outer surface of a cylinder or a cone. A bottom 18 of the recesses 17 runs parallel to the valve seat axis 8.

A flow path between the inlet 5 and the outlet 6 comprises a section 19 between the valve element support 12 and the first housing part 2. The recesses 17 are located in this section 19.

The valve element 9 protrudes in radial direction (in relation to the valve seat axis 8) over the valve element support 12. The valve element 9 together with the valve element support 12 has the form of a droplet when the valve element 9 rests against the valve element support 12.

A flow of fluid passing the section 19 creates a vortex in the recesses 17. This vortex formation decreases the pressure in the recesses 17. This decreased pressure propagates to the chamber 15 and produces a dragging or sucking force sucking the valve element 9 against the valve element support 12.

Thus, when the check-valve 1 is in the fully open condition, as shown in Fig. 1, where the valve element 9 rests against the valve element support 12, the valve element 9 is reliably held against the valve element support 12. The suction force produced by the vortex in the recesses 17 and the force produced by the flow of fluid acting on the valve element 9 from the side of the inlet is larger than the force of a spring 20 acting on the valve element 9 in closing direction, i.e. away from the valve element support 12.

The reduced pressure in the recesses 17 does not only act on the valve element 9 when the valve element 9 is in the fully open condition. Once a flow has been established through the check-valve 1 and reaches the recesses 17, a reduced pressure is produced between the valve element 9 and the valve element support 12 helping to move the valve element 9 towards the valve element support 12.

The valve element support 12 comprises three arms 21 which are distributed in circumferential direction. The arms 21 are made in one piece with the valve element support 12. The arms 21 are connected by a ring 22.

The first housing part 2 comprises a step 23. In a mounted condition the ring 22 rests against the step 23 and is held against the step 23 by means of the second housing part 3 or, when a tube is used instead of the second housing element, by the tube. In this way it is possible to position the valve element support 12 with high precision in relation to the valve seat 7.

A sealing ring 24 is arranged on the radial outer side of ring 22. The second housing part 3 comprises a circumferential protrusion 25 which is inserted into a radial gap between the ring 22 and the first housing part 2. When the second housing part 3 is connected to the first housing part 2 this circumferential protrusion 25 comes in contact with the sealing ring 24 and compresses it slightly in axial direction. The sealing ring 24 which is in form of an O-ring is thus compressed in axial direction and expands in radial direction, i.e. it is pressed in radial outward direction to the inner side of the first housing part 2 and in radial inner direction to the radial outer face of ring 22. Thus, the valve element support 12 is positioned in the first housing part 2 via the sealing ring 24.

The valve seat support 12 comprises a groove 26 accommodating a part of the spring 20. A wall 27 is arranged between the groove 26 and the bore of the valve seat support 12 accommodating the stem 11. Thus, it is possible to have a spring 20 with a relatively large diameter. The consequence is that the spring 20 can be made relatively long and therby have a lower spring force ratio. This has the effect that the valve element support 12 can be positioned close to the valve seat 7 so that in a closed position of the check-valve 1 the free or unsupported length of the stem 11 can be kept short.

The valve element support 12 can be injection moulded, milled or 3D-printed.

In principle a single recess 17 would be sufficient. However, in order to have dragging forces which are equally distributed between the valve element 9 and the valve element support 12 more than one recess 17 is preferred.

The recesses 17 are arranged in the section 19 of the flow path in which the fluid has high velocity.

Such a check-valve is in particular suitable to control a large volume flow of up to 100 m³/h. The outlet 6 can have an inner diameter of 60 to 100 mm. The check-valve 1 can preferably be used for the desalination of salt water or the treatment of waste water by reverse osmosis.

## Claims

1. Check-valve (1) comprising a housing (2, 3) having an inlet (5), an outlet (6), a fluid flow path between the inlet (5) and the outlet (6) and a valve seat (7) in the fluid flow path, the valve seat (7) having a valve seat axis (8), a valve element (9) and a valve element support (12) arranged in the housing (2, 3) and supporting the valve element (9), wherein a section (19) of the fluid flow path is formed between the housing (2, 3) and the valve element support (12) and the valve element (9) is movable between a position in which it rests against the valve seat (7) and a position in which it contacts the valve element support (12), wherein the valve element support (12) comprises at least one recess (17) formed in a side wall of the valve element support (12) and having an open side to the section (19) of the fluid flow path and connecting the section (19) of the fluid flow path to a space between the valve element (9) and the valve element support (12), **characterized in that** the at least one recess (17) has a curved shape and is limited by a section of a cylinder wall or cone wall, wherein an axis of this cylinder wall or cone wall is located out of the valve element support (12) and/or **in that** a bottom (18) of the at least one recess (17) runs in parallel to the valve seat axis (8).

2. Check-valve according to claim 1, **characterized in that** the valve element (9) and the valve element support (12) form a chamber (15) when the valve element (9) rests against the valve element support (12), wherein the chamber (15) is connected to the section (19) of the fluid flow path via the recess (17).

3. Check-valve according to claim 2, **characterized in that** the valve element (9) is concave on the side facing the valve element support (12).

4. Check-valve according to any of claims 1 to 3, **characterized in that** the valve element (9) is flat or concave at a side facing away from the valve element support (12).

5. Check-valve according to any of claims 1 to 4, **characterized in that** the valve element (9) comprises a stem (11) which is guided in the valve element support (12).

6. Check-valve according to claim 5, **characterized in that** a bushing (13) of a material different from the material of the valve element support (12) forms a guide of the stem (11).

7. Check-valve according to claim 5 or 6, **characterized in that** a spring (20) is arranged around the stem (11) and the valve element support (12) comprises a bore accommodating the stem (11), a groove (26) surrounding the bore, and a wall (27) between the bore and the groove (26), wherein part of the spring (20) is arranged in the groove (26).

8. Check-valve according to any of claims 1 to 7, **characterized in that** the valve element support (12) is made of a plastic material.

9. Check-valve according to any of claims 1 to 8, **characterized in that** the valve element support (12) comprises a plurality of arms (21) connecting the valve element support (12) to the housing (2, 3).

10. Check-valve according to claim 9, **characterized in that** the housing (2, 3) comprises a first housing part (2) and a second housing part (3), wherein a radial outer end of the arms (21) is arranged between the first housing part (2) and the second housing part (3).

11. Check-valve according to claim 9 or 10, **characterized in that** the arms (21) are connected by a ring (22).

12. Check-valve according to claim 11, **characterized in that** the ring (22) is clamped between a step (23) in the first housing part (2) and the second housing part (3).

13. Check-valve according to claim 11 or 12, **characterized in that** the ring (22) bears a sealing ring (24).

14. Check-valve according to claim 13, **characterized in that** the second housing part (3) comprises a circumferential protrusion (25) inserted into a radial gap between the ring (22) and the first housing part (2) and compressing the sealing ring (24).

## Patentansprüche

1. Rückschlagventil (1) umfassend ein Gehäuse (2, 3) aufweisend einen Einlass (5), einen Auslass (6), einen Fluidströmungsweg zwischen dem Einlass (5) und dem Auslass (6) und einen Ventilsitz (7) in dem Fluidströmungsweg, wobei der Ventilsitz (7) eine Ventilsitzachse (8) aufweist, ein Ventilelement (9) und einen im Gehäuse (2, 3) angeordneten und das Ventilelement (9) tragenden Ventilelementträger (12), wobei ein Abschnitt (19) des Fluidströmungsweges zwischen dem Gehäuse (2, 3) und dem Ventilelementträger (12) ausgebildet ist und das Ventilelement (9) zwischen einer Position, in der es am Ventilsitz (7) anliegt, und einer Position, in der es am Ventilelementträger (12) anliegt, bewegbar ist, wobei der Ventilelementträger (12) zumindest eine Aussparung (17) aufweist, die in einer Seitenwand des Ventilelementträgers (12) ausgebildet ist, eine zu dem Abschnitt (19) des Fluidströmungsweges offenen Seite hat und den Abschnitt (19) des Fluidströmungsweges mit einem Raum zwischen dem Ventilelement (9) und dem Ventilelementträger (12) verbindet,
**dadurch gekennzeichnet, dass** die zumindest eine Aussparung (17) eine gekrümmte Form aufweist und durch einen Abschnitt einer Zylinder- oder Kegelwand begrenzt ist, wobei eine Achse dieser Zylinder- oder Kegelwand außerhalb des Ventilelementträgers (12) liegt und/oder dass ein Boden (18) der zumindest einen Aussparung (17) parallel zur Ventilsitzachse (8) verläuft.

2. Rückschlagventil nach Anspruch 1, **dadurch gekennzeichnet, dass** das Ventilelement (9) und der Ventilelementträger (12) eine Kammer (15) bilden, wenn das Ventilelement (9) an dem Ventilelementträger (12) anliegt, wobei die Kammer (15) mit dem Abschnitt (19) des Fluidströmungsweges über die Ausnehmung (17) verbunden ist.

3. Rückschlagventil nach Anspruch 2, **dadurch gekennzeichnet, dass** das Ventilelement (9) auf der dem Ventilelementträger (12) zugewandten Seite konkav ist.

4. Rückschlagventil nach einem der Ansprüche 1 bis 3, **dadurch gekennzeichnet, dass** das Ventilelement (9) an einer vom Ventilelementträger (12) abgewandten Seite flach oder konkav ist.

5. Rückschlagventil nach einem der Ansprüche 1 bis 4, **dadurch gekennzeichnet, dass** das Ventilelement (9) einen Schaft (11) aufweist, der im Ventilelementträger (12) geführt ist.

6. Rückschlagventil nach Anspruch 5, **dadurch gekennzeichnet, dass** eine Buchse (13) aus einem Material verschieden von dem Material des Ventilelementträgers (12) eine Führung des Schafts (11) bildet.

7. Rückschlagventil nach Anspruch 5 oder 6, **dadurch gekennzeichnet, dass**, dass eine Feder (20) um den Schaft (11) herum angeordnet ist und der Ventilelementträger (12) eine den Schaft (11) aufnehmende Bohrung, eine die Bohrung umgebende Nut (26) und eine Wand (27) zwischen der Bohrung und der Nut (26) aufweist, wobei ein Teil der Feder (20) in der Nut (26) angeordnet ist.

8. Rückschlagventil nach einem der Ansprüche 1 bis 7, **dadurch gekennzeichnet, dass** der Ventilelementträger (12) aus einem Kunststoffmaterial ist.

9. Rückschlagventil nach einem der Ansprüche 1 bis 8, **dadurch gekennzeichnet, dass** der Ventilelementträger (12) eine Vielzahl von Armen (21) aufweist, die den Ventilelementträger (12) mit dem Gehäuse (2, 3) verbinden.

10. Rückschlagventil nach Anspruch 9, **dadurch gekennzeichnet, dass** das Gehäuse (2, 3) ein erstes Gehäuseteil (2) und ein zweites Gehäuseteil (3) umfasst, wobei ein radial äußeres Ende der Arme (21) zwischen dem ersten Gehäuseteil (2) und dem zweiten Gehäuseteil (3) angeordnet ist.

11. Rückschlagventil nach Anspruch 9 oder 10, **dadurch gekennzeichnet, dass** die Arme (21) durch einen Ring (22) verbunden sind.

12. Rückschlagventil nach Anspruch 11, **dadurch gekennzeichnet, dass** der Ring (22) zwischen einer Stufe (23) im ersten Gehäuseteil (2) und dem zweiten Gehäuseteil (3) geklemmt ist.

13. Rückschlagventil nach Anspruch 11 oder 12, **dadurch gekennzeichnet, dass** der Ring (22) einen Dichtungsring (23) trägt.

14. Rückschlagventil nach Anspruch 13, **dadurch gekennzeichnet, dass** das zweite Gehäuseteil (3) einen umlaufenden Vorsprung (25) aufweist, der in einen radialen Spalt zwischen dem Ring (22) und dem ersten Gehäuseteil (2) eingesetzt ist und den Dichtungsring (23) zusammendrückt.

## Revendications

1. Clapet anti-retour (1) comprenant un boîtier (2, 3) ayant une entrée (5), une sortie (6), un trajet d'écoulement de fluide entre l'entrée (5) et la sortie (6) et un siège de clapet (7) dans le trajet d'écoulement de fluide, le siège de clapet (7) ayant un axe de siège de clapet (8), un élément de clapet (9) et un support d'élément de clapet (12) agencé dans le boîtier (2, 3) et supportant l'élément de clapet (9), dans lequel une section (19) du trajet d'écoulement de fluide est formée entre le boîtier (2, 3) et le support d'élément de clapet (12) et l'élément de clapet (9) est mobile entre une position dans laquelle il repose contre le siège de clapet (7) et une position dans laquelle il est en contact avec le support d'élément de clapet (12), dans lequel le support d'élément de clapet (12) comprend au moins un évidement (17) formé dans une paroi latérale du support d'élément de clapet (12) et ayant un côté ouvert vers la section (19) du trajet d'écoulement de fluide et reliant la section (19) du trajet d'écoulement de fluide à un espace entre l'élément de clapet (9) et le support d'élément de clapet (12),
**caractérisé en ce que** l'au moins un évidement (17) a une forme incurvée et est limité par une section d'une paroi cylindrique ou d'une paroi conique, où un axe de cette paroi cylindrique ou paroi conique est situé à l'extérieur du support d'élément de clapet (12) et/ou **en ce qu'**un fond (18) de l'au moins un évidement (17) s'étend parallèlement à l'axe de siège de clapet (8).

2. Clapet anti-retour selon la revendication 1, **caractérisé en ce que** l'élément de clapet (9) et le support d'élément de clapet (12) forment une chambre (15) lorsque l'élément de clapet (9) repose contre le support d'élément de clapet (12), dans lequel la chambre (15) est reliée à la section (19) du trajet d'écoulement de fluide via l'évidement (17).

3. Clapet anti-retour selon la revendication 2, **caractérisé en ce que** l'élément de clapet (9) est concave du côté tourné vers le support d'élément de clapet (12).

4. Clapet anti-retour selon l'une des revendications 1 à 3, **caractérisé en ce que** l'élément de clapet (9) est plat ou concave au niveau d'un côté opposé au support d'élément de clapet (12).

5. Clapet anti-retour selon l'une des revendications 1 à 4, **caractérisé en ce que** l'élément de clapet (9) comprend une tige (11) qui est guidée dans le support d'élément de clapet (12).

6. Clapet anti-retour selon la revendication 5, **caractérisé en ce que** lequel une douille (13) d'un matériau différent du matériau du support d'élément de clapet (12) forme un guide de la tige (11).

7. Clapet anti-retour selon la revendication 5 ou 6, **caractérisé en ce qu'**un ressort (20) est agencé autour de la tige (11) et le support d'élément de clapet (12) comprend un alésage recevant la tige (11), une rainure (26) entourant l'alésage, et une paroi (27) entre l'alésage et la rainure (26), où une partie du ressort (20) est agencée dans la rainure (26).

8. Clapet anti-retour selon l'une des revendications 1 à 7, **caractérisé en ce que** le support d'élément de clapet (12) est réalisé en matériau plastique.

9. Clapet anti-retour selon l'une des revendications 1 à 8, **caractérisé en ce que** le support d'élément de clapet (12) comprend une pluralité de bras (21) reliant le support d'élément de clapet (12) au boîtier (2, 3).

10. Clapet anti-retour selon la revendication 9, **caractérisé en ce que** le boîtier (2, 3) comprend une première partie de boîtier (2) et une deuxième partie de boîtier (3), dans lequel une extrémité extérieure radiale des bras (21) est agencée entre la première partie de boîtier (2) et la deuxième partie de boîtier (3).

11. Clapet anti-retour selon la revendication 9 ou 10, **caractérisé en ce que** les bras (21) sont reliés par une bague (22).

12. Clapet anti-retour selon la revendication 11, **caractérisé en ce que** la bague (22) est serrée entre un gradin (23) dans la première partie de boîtier (2) et la deuxième partie de boîtier (3).

13. Clapet anti-retour selon la revendication 11 ou 12, **caractérisé en ce que** la bague (22) porte une bague d'étanchéité (24).

14. Clapet anti-retour selon la revendication 13, **caractérisé en ce que** la deuxième partie de boîtier (3) comprend une saillie circonférentielle (25) insérée dans un espace radial entre la bague (22) et la première partie de boîtier (2) et comprimant la bague d'étanchéité (24).
